# EUROPEAN PATENT APPLICATION

(11) **EP 4 745 762 A1**
(43) Date of publication of application: **20.05.2026**
(21) Application number: 24306924.2
(22) Date of filing: 18.11.2024
(51) Int. Cl.: G06F 8/41, G06F 11/3668, G06F 8/70, G06F 8/71

(54) **METHOD FOR TESTING CODE COVERAGE OF A SOFTWARE PROGRAM EXECUTED BY A MACHINE IN AN INDUSTRIAL SYSTEM, AND COMPUTER PROGRAM, COMPUTER READABLE STORAGE MEDIUM AND COMPUTING DEVICE FOR THE SAME**

(71) Applicant: SCHNEIDER ELECTRIC INDUSTRIES SAS, 92500 Rueil-Malmaison (FR)
(72) Inventor: DIEHM, Sebastian, 97907 Hasloch (DE); ENGLERT, Tobias, 97836 Bischbrunn (DE); SCHWARZ, Michael, 74722 Buchen-Hainstadt (DE)
(74) Representative: Manitz Finsterwald Patent- und Rechtsanwaltspartnerschaft mbB

(57) **Abstract**

A method for testing code coverage of a software program executed by a machine in an industrial system, comprising: obtaining a control flow model of a first version of the software program as a first control flow model; obtaining a control flow model of a second version of the software program as a second control flow model, wherein the second version is a modified version of the first version; comparing the first control flow model with the second control flow model, to identify one or more code changes of the second version compared to the first version; preparing a set of codes to be tested based on the identified one or more code changes; preparing test data for testing the coverage of the set of codes to be tested; compiling the second version into an assembly code or a binary machine code to be executed by a runtime environment of the machine; adding a check point into the assembly code or the binary machine code at a position corresponding to each code in the set of codes to be tested, wherein the check point is an instruction added into the assembly code or the binary machine code that enables the runtime environment to indicate, when the instruction of the check point is executed, that the code in the set of codes to be tested corresponding to the check point is executed; starting the execution of the assembly code or the binary machine code in the runtime environment using the test data; and determining whether each code in the set of codes to be tested is covered according to the indication from the runtime environment.

## Description

### Field

The present disclosure relates to testing code coverage of a software program executed by a machine in an industrial system.

### Background

In an industrial system, such as an automation system, a machine is often implemented with a machine application for a function of the industrial system. For such a machine application, a software program is usually created to be executed by the machine.

The software program of a machine application needs to be tested to confirm its functional correctness. A basic issue of testing the software program is to validate that tests executed cover all the code intended to be tested in the software program, which is a code coverage test.

Conventionally, for testing code coverage, the code of the software program is instrumented by introducing additional code, and by tracing the execution of the additional code it is possible to know how much or which parts of the code are covered by tests.

However, instrumenting such kind of additional code brings additional problems. For example, the dynamic behaviour of the original code executed by the machine is changed to an extend that the test results become worse, invalid, or the machine even stops operating due to cycle time exceeded, watchdog, crash, etc.

Further, when a software program is to be updated to a new version, it becomes an issue how to efficiently arrange the code coverage test for the code changes in the new version compared to a previous version.

### Summary

It is provided a method for testing code coverage of a software program executed by a machine in an industrial system, and a computer program, a computer readable storage medium and a computing device for the same.

### Detailed Description

A software program to be executed by a machine in an industrial system can be converted into a control flow model that can represent the codes of the software program in a structured model, e.g., a control flow graph (CFG), an Abstract Syntax Tree (AST), etc.

A control flow model includes code blocks and branches representing the control flow of a software program, wherein a code block includes a sequence of instructions that are executed either in total or not at all, while a branch is normally initiated by an "if" condition instruction or a jump instruction.

An exemplary software program may be:

```
       IF <condition 0> THEN
              ASSIGNMENT 0
       ELSE IF <condition 1> THEN
              ASSIGNMENT 1
       ELSE
              NULL
       END IF
```

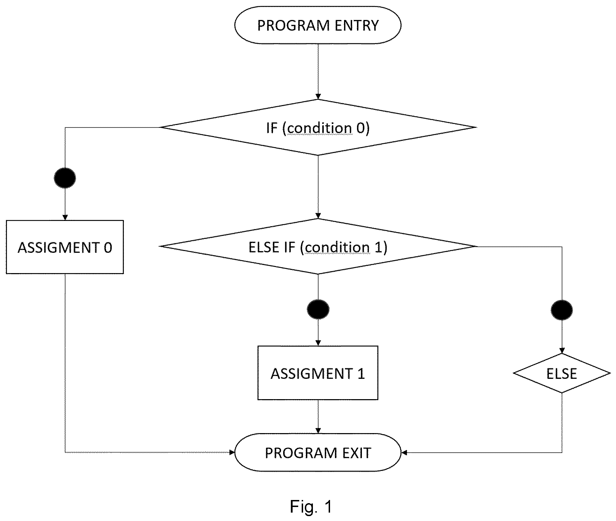

Based on this exemplary software program, a CFG as an example of a control flow model can be obtained as shown in Fig. 1, which includes three branches. Two out of the three branches each comprises a code block for an ASSIGNMENT operation. Of course, a software program of a real machine application is normally much more complicated and thus a control flow model obtained therefrom is also much more complicated than the control flow mode shown in Fig. 1. Anyway, a control flow model basically comprises branches and code blocks as shown in Fig. 1.

To test the code coverage of a software program, a check point may be added in each of the branches, as exemplarily shown by the black points in Fig. 1.

A check point may be added after the code of the software program has been compiled into an assembly code or a binary machine code to be executed by a runtime environment of the machine in the industrial system. For this purpose, the correspondence between the assembly code or the binary machine code and the control flow model, e.g., the CFG, may be obtained based on the correspondence between the source code of the software program and the control flow model, which is obtained upon generating the control flow model from the source code, and based on the correspondence between the source code and the assembly code or the binary machine code, which is obtained upon compiling the source code.

A check point may be added at a position in the assembly code or the binary machine code corresponding to each of the branches and/or the code blocks to be tested in the software program.

A check point is an instruction added into the assembly code or the binary machine code that enables the runtime environment to indicate, when the instruction of the check point is executed, that the branch or the code block of the software program corresponding to the check point is executed.

In this respect, a check point may be a function calling instruction, in the form of assembly code or binary machine code, that calls a function to output, by the runtime environment, an identifier of the branch or the code block of the software program corresponding to the check point. For this purpose, before adding the check point, an identifier may be assigned to each of the branches or the code blocks to be covered by a code coverage test. The identifier may be in any form that can distinguish different branches and code blocks of the software program, e.g., an integer number, a text string with a meaning reflecting a characteristic of a branch or a code block, a mixture of text string and number, etc.

Further, the step of adding a check point into the assembly code or the binary machine code may include at least one of the following manners: First, a check point may be inserted into the assembly code or the binary machine code at a position corresponding to a code to be tested without further changing the assembly code or the binary machine code; Second, a code in the assembly code or the binary machine code at a position corresponding to a code to be tested is replaced with a check point; Third, a code in the assembly code or the binary machine code at a position corresponding to a code to be tested is revised, and a check point is inserting into the assembly code or the binary machine code at a position corresponding to the code to be tested.

For example, if a code (corresponding to assembly code or machine code) is given:

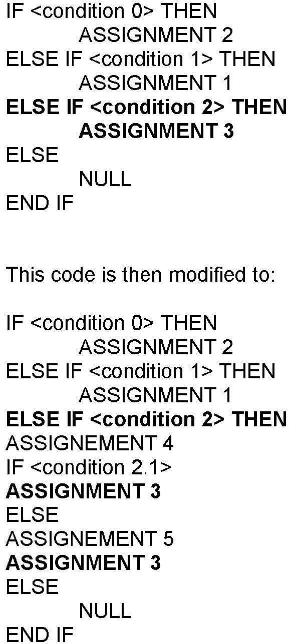

If the code is modified, also the corresponding assembly code or machine code is changed.

For the modified example the user or algorithm might can decide which modification of the code should be tested, e.g. according to selectable criteria e.g. relevant path execution, code complexity to cover or others.

For example, a checkpoint previously present in the machine/assembly code of "ASSIGNMENT 3" can be moved to the new part of the code that corresponds to "ASSIGNMENT 3". Thereby, the code of the checkpoint would be revised. Alternatively, the checkpoint could be moved e.g. in the machine/assembly code corresponding to "ASSIGNMENT 5", thereby replacing the machine/assembly code with a machine/assembly code comprising a checkpoint.

Since a check point can be a very short instruction in the form of assembly code or binary machine code added after the software program is compiled into assembly code or binary machine code, the addition of a check point minimizes the impact on the runtime, including the impact on execution time and behaviour, so that the dynamic behaviour of the original code executed by the machine is most likely not to be changed to an extend that the test results become worse, invalid, or the machine even stops operating due to cycle time exceeded, watchdog, crash, etc. As a result, the accuracy of the code coverage test can be significantly improved.

For testing the code coverage of a software program, one or more test cases may be prepared. Each test case may be designed with an intention to test whether one or more of the branches and/or code blocks of the software program are covered. To this end, a test case may include necessary inputs for the software program taking into consideration of different conditions that may lead the runtime execution to the intended branch or intended code block. A single test case may be prepared for the entire software program for testing the coverage of all branches and code blocks intended to be tested. However, for a complicated software program, it is usual to prepare multiple test cases for testing the code coverage of different parts of the software program.

When a code coverage test is completed using one or more test cases, e.g., it is confirmed that at least one of the three check points as shown in Fig. 1 is executed in the runtime, the one or more test cases can be stored in a historic test database for the tested software program and thus could be utilized later for testing a later version of the software program.

In this respect, it is generally known that a software program is often modified due to different reasons, e.g., correcting a bug in a previous version, adding a new function, changing a function to another function, etc.

After a software program is modified based on a previous version, a code coverage test may be conducted as an important step for testing the correctness of the modified version.

For testing the code coverage of a modified version of a software program, an efficient manner is to merely test the code changes compared to the previous version, instead of testing the entire software program. In addition, the codes relevant to a code change may also be tested, by which an unwanted side effect of a code change may be caught. In this respect, a relevant code that is relevant to a code change may refer to a code that may be affected by the code change.

In this respect, the first task is to identify the code changes between the previous version (may be called as a first version) and the modified version (may be called as a second version). The previous version may for example correspond a control flow model, e.g. the CFG as shown in Fig. 1, and the modified version may read:

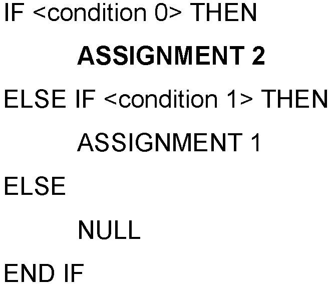

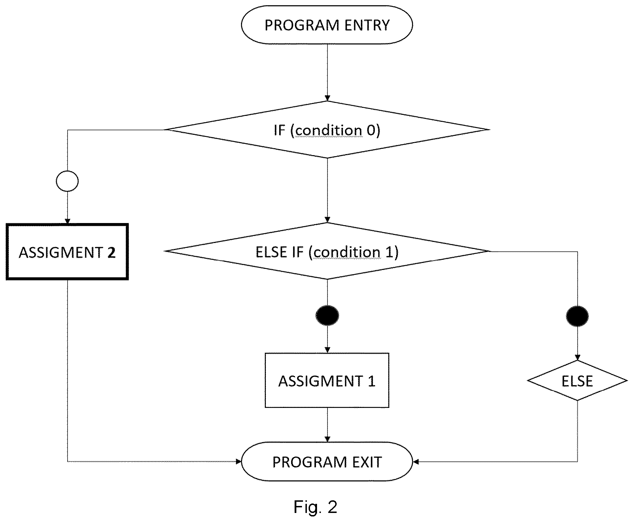

In this exemplary modified version, the code block "ASSIGNMENT 0" is modified as "ASSIGNMENT 2", which is a code change of a code block. From this modified version, a control flow model, e.g., the CFG as shown in Fig. 2, can be obtained. By comparing the control flow models of the previous and modified versions, e.g., comparing the CFG of Fig. 2 with the CFG of Fig. 1, this code change can be identified. Then, as shown in Fig. 2, the check point of the code change may be marked in a different manner, such as a white point, for distinguishing from the black points for the unchanged codes.

The software program corresponding to the CFG as shown in Fig. 2 may be further modified, e.g.,

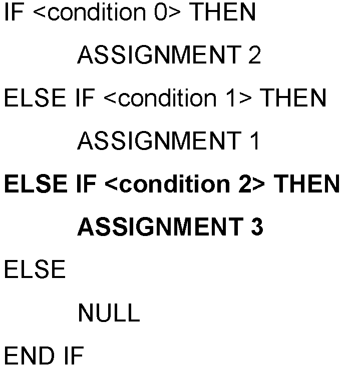

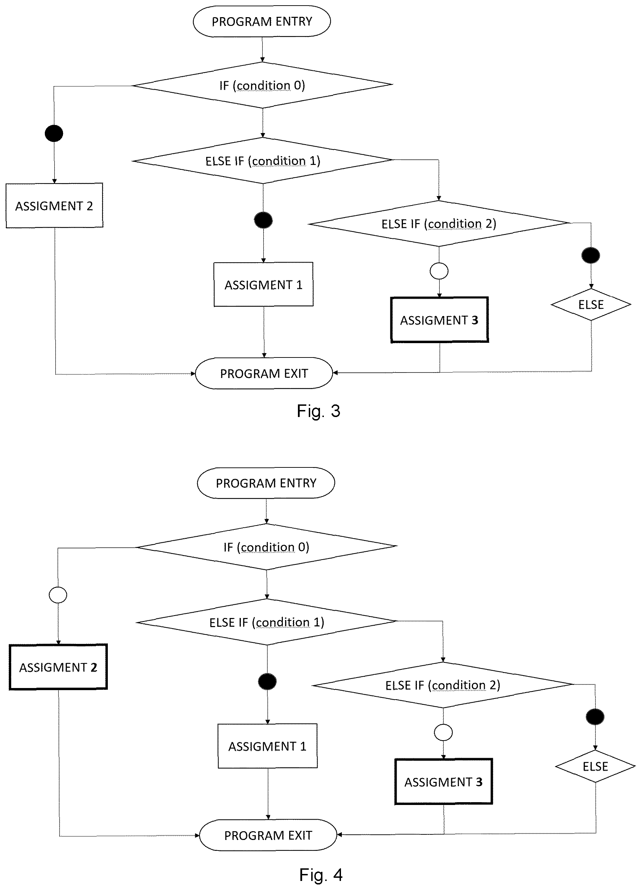

In this example, a new branch due to a new "condition 2" with a new code block of "ASSIGNMENT 3" is added as a code change, from which a control flow model, e.g., the CFG as shown in Fig. 3, can be obtained. By comparing the CFG of Fig. 3 with the CFG of Fig. 2 as an example, the code change can be identified. Then, as shown in Fig. 3, a new white point may be added as a new check point in the new branch, if the software program corresponding to Fig. 2 is regarded as a previous version.

In view of the above, code change may include two basic types:
type 1: a code block is changed;
type 2: a new code branch is added.

Further, it is also possible to have a type 3 for code change that a branch in the previous version is deleted. This however does not relate to the code coverage test, since a deleted branch cannot be tested by a code coverage test.

Moreover, it is also possible to conduct the above two modifications together, and thus by comparing the obtained CFG shown in Fig. 4 with the CFG shown in Fig. 1 as an example, two code changes can be identified and thus two white points as two new check points are shown in Fig. 4, as an example.

Of course, for a complicated machine application, a new version of a software program may contain one or more code changes of type 1, and/or one or more code changes of type 2. Hence, for each of code changes of type 1, the check point may be renewed so as to be tested in the code coverage test of the code changes, while for each of code changes of type 2, a new check point may be added for the code coverage test of the code changes.

Further, for a new version with many code changes, it may not be necessary to conduct coverage test for each code change, because some of the code changes may be not important and thus are not to be tested. That is, after all the code changes are identified by comparing the control flow models, a selecting step may be performed to select one or more of the code changes to be tested.

In addition, as mentioned above, a code relevant to a code change may also be tested, by which an unwanted side effect of a code change may be caught, wherein a relevant code that is relevant to a code change to be tested may refer to a code that may be affected by the code change. For example, the code block "ASSIGNMENT 1" in Figs. 3 and 4 has not been changed but may still be tested since it is close to the code change of "ASSIGNMENT 3" and/or "ASSIGNMENT 1". In other words, if an unchanged branch or code block has the same immediate upstream junction node and the same immediate downstream junction in the corresponding control flow mode as the code change. For another example, a code as a branch of a condition code while the condition of the condition code is affected by the code change.

As an example, a "SWITCH" or "CASE" statement, i.e. a condition, could be used to execute two parallel branches of code that have the same immediate upstream and/or downstream junction node. In the following examples, depending on the variable "diState", two different branches of code (beginning with "10:" and "40:") could be executed.

```
 CASE diState OF
  
     // Initialize based on condition
     10:
          IF xCondition1 THEN
              sParameter := 'Value A';
          ELSE
              sParameter := 'Value B';
          END IF
  
     // Operational
     40:
          DoSomethingWithParameter(sParameter);
 END_CASE
```

As can be seen, a change in the code of branch "10:", e.g. by changing "Value A" would also affect the code executed in branch "40:".

In view of the above, a set of codes to be tested can be prepared, which may include each of the identified code changes or only a part of the identified code changes. For an identified code change included in the set of codes to be tested, one or more relevant codes that are relevant to the identified code change may also be included in the set of codes to be tested.

For testing the code coverage of the set of codes to be tested of a modified version compared to a previous version, it is possible to design one or more new test cases as test data, focusing on an intention to lead the execution of the software program by the runtime environment to all the codes in the set of codes to be tested.

However, it is also possible to search relevant test cases from the historical test database, so that previous test cases may be utilized for a more efficient preparation of the test data for testing the newly modified version.

For example, for a code change of type 1, a search from the historical test database may find a test case that covers the original code block before the code block is modified, e.g., a test case that covers the code block of "ASSIGNMENT 0" as shown in Fig. 1 which is then modified as "ASSIGNMENT 1" as shown in Fig. 2. This relevant test case found in the historical test database can then be used as a candidate to be a part of the test data for testing the code change of the modified version.

For a code change of type 2, it is normally not covered by any test case before, since it relates to a new branch. Hence, a search can normally not find a test case from the historical test database that covers a code change of type 2. However, it is still useful to look for a test case from the historical test database that is relevant to the code change, for example, a test case covering a code block or a branch that can lead to a code change of type 2. For example, for a code coverage test aiming at the new branch with "condition 2" as shown in Fig. 3 or Fig. 4, it is useful if a test case that covers the relevant "condition 1" is found, so that the found test case may be easily extended with an intention to lead the test to the new branch with "condition 2". That is, this found relevant test case may be used a candidate, as a part of the test data, for extending the test to the new branch of the modified version.

In some situations, it is possible that a branch has been removed from the software program in a version earlier than the directly previous version and is reintroduced in the currently modified version. In such a case, it is possible to find a relevant test case in the historical test database that covers the reintroduced branch, although the branch is considered as a new branch of type 2 compared to the directly previous version. That is, a relevant test case found could mean a test case covering the branch of the code change in the case the code change is of type 2. Such a situation is similar to the situation of a code change of type 1.

On the other hand, it is also possible that no relevant test case is found for a code change of type 1 since the original code block before the change has never been tested. Such a situation is similar to the situation of a code change of type 2. That is, it is still useful to look for a relevant test case that can be easily extended with an intention to lead the test to the code change of type 1. That is, a relevant test case found may be a test case covering a code block or a branch that can lead to the code change if the code change is of type 1.

In a more complicated situations, the modified version may contain a relatively large number of code changes including type 1 and/or type 2, and the search from the historical test database may find many relevant test cases that may be combined in different groups to cover all the code changes of the currently modified version intended to be tested.

In addition, a relevant test case may be relevant to a code change as described above, and may also be relevant to a relevant code in the set of codes to be tested. In this respect, a relevant test case may be a test case covering a relevant code in the previous version of the software program; or may be a test case covering a code block or a branch that can lead to the relevant code in the first version of the software program.

For example, for a currently modified version a set of codes to be tested includes 4 codes: C1, C2, C3 and C4. A search from the historical test database finds the following relevant test cases as candidates for the test data of the code coverage test of the modified version:
TC1 relevant to C1;
TC2 relevant to C2;
TC3 relevant to C3;
TC4 relevant to C4;
TC5 relevant to C1 and C2;
TC6 relevant to C3 and C4;
TC7 relevant to C1, C2 and C3;
TC8 relevant to C2, C3 and C4;
TC9 relevant to C1, C2, C3 and C4.

Hence, there are different possible combinations out of the test cases TC1 to TC9 to cover all the codes to be tested C1 to C4. For example, each of the following groups can cover all the codes to be tested C1 to C4:
(i) a group with TC1 to TC4;
(ii) a group with TC1 and TC8;
(ii) a group with TC4 and TC7;
(iv) a group with TC5 and TC6;
(v) a group with TC5 and TC8 with an overlap on C2;
(vi) a group with TC6 and TC7 with an overlap on C3;
(vii) a group with TC9 alone.

For an efficient test for the coverage of the codes to be tested, the test data may include an optimized group of test cases that are relevant to all the codes to be tested covered by the multiple test cases. Thus, the test case or test cases not in the optimized group can be less prioritized. A test case that is less prioritized may mean that it is not included in the test data for testing the code coverage, and may also mean that it is included in the test data for testing the code coverage but with a lower priority level, i.e., it can be used for testing the code coverage if it is considered to be beneficial to execute multiple tests covering a same code change.

For selecting an optimized group, at least one of the following factors may be taken into consideration: the number of relevant test cases in the optimized group; the testing workload generated by the relevant test cases in the optimized group; the number of failures in the previous tests generated by the relevant test cases in the optimized group; the criticality of the relevant test cases in the optimized group.

The test workload mentioned here may be the testing time needed for completing a test using a test case. The criticality of a test case may be determined based on at least one of the following: the priority of the system requirement linked to the test case, or the level of a problem tested by the test case. For example, if a test case is linked to a requirement for the industrial system, the priority, e.g., based on the business value, assigned to the requirement could be used to derive a criticality for the test case. For another example, if a test case was originally created due to a bug found in the code, the result of an impact analysis could be used to define the criticality of the test case, e.g. a test case covering a visual flaw is less important than a test case covering potential machine damage.

The above-mentioned factors to be taken into consideration for selecting an optimized group may be assigned with different weights, and a group of relevant test cases with a best sum of weighted factors may be chosen as the optimized group.

In the above example, group (vii) with test case TC9 alone has the minimum number of test cases, and thus can be included in the test data, so that the other test cases may be less prioritized.

However, it is possible that test case TC9 is in fact a very large test case for testing a large number of check points of a previous version. That is, the testing workload introduced by test case TC9 alone is very large. On the other hand, one or more of groups (i) to (vi), although each with a larger number of test cases, may generate a testing workload being smaller than that generated by group (vii), thus may become a better option for testing the code coverage of the code changes C1 to C4. In this respect, it is even possible that group (i) with the largest number of test cases may generate the lowest testing workload, and thus can be selected to be included in the test data for the code coverage test of the code changes.

In addition, it is also possible that each group obtained from the historic test database would generate a too large testing workload in view of the code changes in a small number. In such a case, it may be considered to generate a new test case for the code changes, without using any test case in the historic test database.

After selecting a test case or a group of test cases into the test data, the test data may have to be further processed. As mentioned above, for each of type 1 and type 2 code changes, it is possible that no test case can be found in the historical test database that covers a code change. In such a situation, if a relevant test case is found that can lead to the code change, the relevant test case may be extended with an intention to cover the code change; otherwise, a new test case may be generated with an intention to cover the code change.

After the test data for testing the coverage of the code change has been prepared, the code coverage test can be started by starting the execution of the assembly code or the binary machine code, added with check points corresponding to the code changes, in a runtime environment of the machine using the test data. The step of compiling the software program into the assembly code or the binary machine code can be done at any time before adding the check points. The check points corresponding to the code changes can be added at any time after the code changes have been identified and after the step of compiling, but before the start of the test.

Before testing the coverage of code change, the control flow model, e.g. the CFG, of the modified version may be shown on a screen, and each check point for the codes to be tested may be shown in a first mode in the CFG of the modified version at the position corresponding to the respective one of the one or more codes to be tested. Upon testing, when the runtime environment indicates a check point is executed, the check point in the CFG may be shown in a second mode being different from the first mode. For example, the first mode and the second mode may be different in colours, and/or different in shapes, and/or different by static or blinking. In addition, the relevant codes in the set of codes to be tested may be marked in different manner compared to the code changes in the set of codes to be tested.

After the coverage test of the code changes, if it is confirmed that a code to be tested is covered and the code is tested by a newly generated test case or by an extended test case, the newly generated test case or the extended test case may be included in the historic test database.

In the historic test database, each test case may be stored with a list of the branches and/or code blocks being tested by the test case. In this respect, each of the branches and code blocks of the software program may be assigned with an identifier to be distinguished from the others.

For a large-scale software program, the total number of branches and code blocks could be very large and thus the length of the identifier has also to be large. However, a lengthy identifier means that the instruction of the corresponding check point becomes long as well, which increases the negative impact on the normal execution of the software program.

On the other hand, a coverage test of the code changes usually relates only to a small number of code changes, and possibly also their relevant codes. Hence, it can be considered to assign short identifiers with a minimum length in view of the number of the codes to be tested. For example, if only 4 codes are to be tested, a two-bit identifier may be assigned. Thus, the length of the instruction of check point can be minimized, so as to minimize the impact on the normal execution. If the coverage of the code changes is confirmed by a test, the code block or branch corresponding to a tested code may be assigned with a long identifier being different from any of identifiers stored in the historic test database, and then stored in the historic test database together with the corresponding test case.

The above method for testing code coverage of a software program executed by a machine in an industrial system may be implemented by computer program, which may be stored in a computer readable storage medium and executed by computing product.

Further examples:
Example 1. A method for testing code coverage of a software program executed by a machine in an industrial system, comprising:
   obtaining a control flow model of a first version of the software program as a first control flow model;
   obtaining a control flow model of a second version of the software program as a second control flow model, wherein the second version is a modified version of the first version;
   comparing the first control flow model with the second control flow model, to identify one or more code changes of the second version compared to the first version;
   preparing a set of codes to be tested based on the identified one or more code changes;
   preparing test data for testing the coverage of the set of codes to be tested;
   compiling the second version into an assembly code or a binary machine code to be executed by a runtime environment of the machine;
   adding a check point into the assembly code or the binary machine code at a position corresponding to each code in the set of codes to be tested, wherein the check point is an instruction added into the assembly code or the binary machine code that enables the runtime environment to indicate, when the instruction of the check point is executed, that the code in the set of codes to be tested corresponding to the check point is executed;
   starting the execution of the assembly code or the binary machine code in the runtime environment using the test data; and
   determining whether each code in the set of codes to be tested is covered according to the indication from the runtime environment.
Example 2. The method of example 1, wherein
   the step of preparing a set of codes to be tested based on the identified one or more code changes comprises:
   including each of the identified one or more code changes into the set of codes to be tested; or
   including a part of the identified one or more code changes into the set of codes to be tested.
Example 3. The method of example 2, wherein
   the step of preparing a set of codes to be tested based on the identified one or more code changes further comprises:
   including a relevant code that is relevant to a code change in the set of codes to be tested into the set of codes to be tested,
   wherein a relevant code that is relevant to a code change in the set of codes to be tested refers to a code that may be affected by the code change.
Example 4. The method of 3xample 3, wherein a relevant code that is relevant to a code change in the set of codes to be tested refers to at least one of the following codes:
   a code that has the same immediate upstream junction node and the same immediate downstream junction in the corresponding control flow mode as the code change;
   a code as a branch of a condition code while the condition of the condition code is affected by the code change.
Example 5. The method of any one of examples 1 to 4, wherein
   the step of preparing a set of codes to be tested based on the identified one or more code changes further comprises: assigning an identifier to each code in the set of codes to be tested; and
   each check point is a function calling instruction that calls a function to output, by the runtime environment, the identifier of the code corresponding to the check point.
Example 6. The method of example 5, wherein
   the identifier has a minimum length for distinguishing the codes in the set of codes to be tested.
Example 7. The method of any one of examples 1 to 6, wherein
   the step of adding a check point into the assembly code or the binary machine code at a position corresponding to each code in the set of codes to be tested comprises at least one of the followings:
   inserting a check point into the assembly code or the binary machine code at a position corresponding to a code in the set of codes to be tested; or
   replacing a code in the assembly code or the binary machine code at a position corresponding to a code in the set of codes to be tested with a check point; or
   revising a code in the assembly code or the binary machine code at a position corresponding to a code in the set of codes to be tested, and inserting a check point into the assembly code or the binary machine code at a position corresponding to the code in the set of codes to be tested.
Example 8. The method of any of the preceding examples, wherein the step of preparing test data for testing the coverage of the set of codes to be tested comprises:
   searching, in a historical test database for the software program, for one or more relevant test cases that are relevant to the one or more codes in the set of codes to be tested, wherein a relevant test case is relevant to a code change in the set of codes to be tested and/or is relevant to a relevant code in the set of codes to be tested;
   preparing the test data based on the relevant test cases found from the historical test database.
Example 9. The method of any of the preceding examples, wherein each of the one or more code changes is of one of the following types:
   type 1: a code block is changed;
   type 2: a new code branch is added.
Example 10. The method of example 9, wherein a relevant test case being relevant to a code change in the set of codes to be tested means:
   a test case covering a code block before a change is made to the code block if the code change is of type 1; or
   a test case covering the branch of the code change if the code change is of type 2; or
   a test case covering a code block or a branch that can lead to the code change if the code change is of type 1; or
   a test case covering a code block or a branch that can lead to the code change if the code change is of type 2.
Example 11. The method of any of examples 8 to 10, wherein a relevant test case being relevant to a relevant code in the set of codes to be tested means:
   a test case covering the relevant code in the first version of the software program; or
   a test case covering a code block or a branch that can lead to the relevant code in the first version of the software program.
Example 12. The method of any one of examples 8 to 11, wherein
   when multiple relevant test cases are found from the historic test database, selecting, from the multiple relevant test cases, an optimized group of relevant test cases that covers all the codes to be tested covered by the multiple relevant test cases.
Example 13. The method of example 12, wherein
   the step of selecting the optimized group takes at least one of the following factors into consideration:
   the number of relevant test cases in the optimized group;
   the testing workload generated by the relevant test cases in the optimized group;
   the number of failures in the previous tests generated by the relevant test cases in the optimized group;
   the criticality of the relevant test cases in the optimized group.
Example 14. The method of any of examples 8 to 13, wherein
   when no test case is found to cover a code in the set of codes to be tested,
   generating a new test case with an intention to cover the code; or
   extending a relevant test case with an intention to cover the code.
Example 15. The method of example 14, comprising:
   including the new test case or the extended test case into the historic test database, if the runtime environment indicates that the check point corresponding to the intended code change is executed.
Example 16. The method of any of the preceding examples, comprising:
   showing the control flow model of the second version on a screen;
   showing each check point in a first mode in the shown control flow model of the second version at the position corresponding to the respective code in the set of codes to be tested before starting the execution of the assembly code or the binary machine code in the runtime environment using the test data;
   showing a check point in a second mode being different from the first mode, when the runtime environment indicates that the code corresponding to the check point is executed.
Example 17. The method of any of the preceding examples, wherein the control flow model is a control flow graph, CFG, or an Abstract Syntax Tree, AST.
Example 18. A computer program including instructions, when being executed by a computing device, enabling the computer to perform the method of examples 1 to 17.
Example 19. A computing device, adapted to execute the computer program of example 18.
Example 20. A computer readable storage medium that stores the computer program of example 18.

The above description is only for illustration purpose but not to limit the scope of protection. Further modifications and alterations may be made within the scope of protection as set out in the claims.

## Claims

1. A method for testing code coverage of a software program executed by a machine in an industrial system, comprising:
obtaining a control flow model of a first version of the software program as a first control flow model;
obtaining a control flow model of a second version of the software program as a second control flow model, wherein the second version is a modified version of the first version;
comparing the first control flow model with the second control flow model, to identify one or more code changes of the second version compared to the first version;
preparing a set of codes to be tested based on the identified one or more code changes;
preparing test data for testing the coverage of the set of codes to be tested;
compiling the second version into an assembly code or a binary machine code to be executed by a runtime environment of the machine;
adding a check point into the assembly code or the binary machine code at a position corresponding to each code in the set of codes to be tested, wherein the check point is an instruction added into the assembly code or the binary machine code that enables the runtime environment to indicate, when the instruction of the check point is executed, that the code in the set of codes to be tested corresponding to the check point is executed;
starting the execution of the assembly code or the binary machine code in the runtime environment using the test data; and
determining whether each code in the set of codes to be tested is covered according to the indication from the runtime environment.

2. The method of claim 1, wherein
the step of preparing a set of codes to be tested based on the identified one or more code changes comprises:
including each of the identified one or more code changes into the set of codes to be tested; or
including a part of the identified one or more code changes into the set of codes to be tested.

3. The method of claim 2, wherein
the step of preparing a set of codes to be tested based on the identified one or more code changes further comprises:
including a relevant code that is relevant to a code change in the set of codes to be tested into the set of codes to be tested,
wherein a relevant code that is relevant to a code change in the set of codes to be tested refers to a code that may be affected by the code change, including at least one of the following codes:
a code that has the same immediate upstream junction node and the same immediate downstream junction in the corresponding control flow mode as the code change;
a code as a branch of a condition code while the condition of the condition code is affected by the code change.

4. The method of any one of claims 1 to 3, wherein
the step of preparing a set of codes to be tested based on the identified one or more code changes further comprises: assigning an identifier to each code in the set of codes to be tested; and
each check point is a function calling instruction that calls a function to output, by the runtime environment, the identifier of the code corresponding to the check point.

5. The method of any of the preceding claims, wherein the step of preparing test data for testing the coverage of the set of codes to be tested comprises:
searching, in a historical test database for the software program, for one or more relevant test cases that are relevant to the one or more codes in the set of codes to be tested, wherein a relevant test case is relevant to a code change in the set of codes to be tested and/or is relevant to a relevant code in the set of codes to be tested;
preparing the test data based on the relevant test cases found from the historical test database.

6. The method of any of the preceding claims, wherein each of the one or more code changes is of one of the following types:
type 1: a code block is changed;
type 2: a new code branch is added.

7. The method of claim 6, wherein a relevant test case being relevant to a code change in the set of codes to be tested means:
a test case covering a code block before a change is made to the code block if the code change is of type 1; or
a test case covering the branch of the code change if the code change is of type 2; or
a test case covering a code block or a branch that can lead to the code change if the code change is of type 1; or
a test case covering a code block or a branch that can lead to the code change if the code change is of type 2.

8. The method of any of claims 5 to 7, wherein a relevant test case being relevant to a relevant code in the set of codes to be tested means:
a test case covering the relevant code in the first version of the software program; or
a test case covering a code block or a branch that can lead to the relevant code in the first version of the software program.

9. The method of any one of claims 5 to 8, wherein
when multiple relevant test cases are found from the historic test database, selecting, from the multiple relevant test cases, an optimized group of relevant test cases that covers all the codes to be tested covered by the multiple relevant test cases.

10. The method of claim 9, wherein
the step of selecting the optimized group takes at least one of the following factors into consideration:
the number of relevant test cases in the optimized group;
the testing workload generated by the relevant test cases in the optimized group;
the number of failures in the previous tests generated by the relevant test cases in the optimized group;
the criticality of the relevant test cases in the optimized group.

11. The method of any of claims 5 to 10, wherein when no test case is found to cover a code in the set of codes to be tested,
generating a new test case with an intention to cover the code; or
extending a relevant test case with an intention to cover the code.

12. The method of claim 11, comprising:
including the new test case or the extended test case into the historic test database, if the runtime environment indicates that the check point corresponding to the intended code change is executed.

13. A computer program including instructions, when being executed by a computing device, enabling the computer to perform the method of claims 1 to 12.

14. A computing device, adapted to execute the computer program of claim 13.

15. A computer readable storage medium that stores the computer program of claim 13.
